# EUROPEAN PATENT APPLICATION

(11) **EP 0 532 340 A2**
(43) Date of publication of application: **17.03.1993**
(21) Application number: 92308283.8
(22) Date of filing: 11.09.1992
(51) Int. Cl.: B44F 7/00, B29D 12/02, B44C 3/04

(54) **A synthetic resin decorative product and a process for manufacturing same**

(30) Priority: 13.09.1991 JP 234874/91
(71) Applicant: HORIKAWA SEISAKUSHO Co., Ltd., Sabae-Shi, Fukui-ken 916 (JP)
(72) Inventor: Arakawa, Tatsue, Fukui-shi, Fukui-ken (JP)
(74) Representative: Carpenter, David

(57) **Abstract**

A synthetic resin decorative product and a method for producing the product, the product including a leaf pigment in the synthetic resin material, the leaf pigment forming a leafing layer (L) which is deflected within the synthetic resin material in order to provide an optically three dimensional stereographic pattern which is visible through a surface of the product.

## Description

This invention relates to a synthetic resin decorative product and a process for manufacturing the product. The product includes a three dimensional stereographic pattern visible at a smooth surface of the product, and is suitable for use in a variety of applications using synthetic resin moldings, for example, parts of the frame of a pair of spectacles, or in decorative products for indoor or outdoor use.

In the past, patterns have been provided on synthetic resin products by embossing, laser machining (for example as described in Japanese HEISEI 1-222956 issued on 6 September 1989), or by cutting the surface of the products. A product of such processes includes a three dimensional surface pattern having the disadvantage that it may become stained due to the adhesion of grease or dust to the convex or concave parts of the pattern, resulting in the product having an unsightly appearance, and the product being unhygienic.

Plastic tiles and synthetic resin sheets (for use as decorative floor or wall coverings) have been produced by scattering pieces of coloured resin onto a synthetic substrate, and then bonding a transparent synthetic resin sheet to the substrate using a hot press technique. The resulting product includes a three dimensional pattern. However, only simple scattering patterns can be produced using this method. Plastic tiles or synthetic resin sheets produced using this method lack variety, and use of such products has been limited.

It is an object of the present invention to provide a synthetic resin product having a three dimensional pattern.

A primary object of the invention is for the product to include a stereographic pattern in and/or at a smooth plane or curved surface of the product.

Another object is to provide a process for manufacturing a synthetic resin product provided with a deep stereographic pattern at and/or beneath a smooth plane or curved surface thereof.

A further object is to provide a process whereby a variety of stereographic patterns can be provided so as to be visible at and/or beneath a smooth plane or curved surface of a small area, such as the surface of parts of the frame of a pair of spectacles.

Other objects and advantages of this invention will become apparent from the following description.

According to a first aspect of the present invention, there is provided a process for manufacturing a synthetic resin decorative product having an optically three-dimensional stereographic pattern, the process comprising the steps of:
molding a synthetic resin material including a leaf pigment, the leaf pigment forming a leafing layer (L) within the synthetic resin material,
deflecting the position of the leafing layer (L) within the synthetic resin material, and
cutting or abrading the surface of the molded synthetic resin material (P) so as to provided a smooth plane or curved surface at and/or through which the pattern is visible.

According to a second aspect of the invention there is provided a synthetic resin decorative product manufactured using the process of the first aspect, having an optically three dimensional stereographic pattern which is visible at a surface of the product.

The invention will further be described by way of example with reference to the accompanying drawings, in which:
Figure 1 is a sectional view of a metal mold for use in manufacturing the product of example 1 of the invention;
Figure 2 is a view of a stream of synthetic resin and leaf pigment when the synthetic resin material is injected into the metal mold of Figure 1;
Figure 3 is a partial sectional perspective view of the synthetic resin molding of Figure 2 removed from the metal mold;
Figure 4 is a partial sectional perspective view of the synthetic resin molding of Figure 3 after the surface of the molding has been cut and abraded;
Figure 5 is an enlarged sectional view of a stream of synthetic resin and leaf pigment in a cavity of the mold of Figure 1;
Figure 6 is a view of the synthetic resin molding of Figure 5 after the surface of the molding has been cut and abraded; and
Figure 7 is a schematic illustration of a manufacturing process according to example 2 of the invention.

The synthetic resin product of the invention can be produced by intentionally deflecting a leafing layer including leaf pigment in a synthetic resin molding so as to form a pattern, figure or character, and then cutting the synthetic resin molding so as to form a smooth surface.

Any transparent synthetic resin material may be used in the process, and the material may be either thermoplastic or thermosetting, so long as the material is capable of being molded whilst including a leaf pigment. Suitable synthetic resin materials include cellulose propionate resin, vinyl chloride resin, methacrylate resin, polycarbonate resin, polyamide resin, polyester resin, epoxy resin or silicone resin.

Any leaf pigment (a pigment wherein the particles are in the form of "leaves" or platelets) such as a graphite type leaf pigment (for example graphite), mica type leaf pigment (for example micaceous iron oxide) or a metal type leaf pigment may be used so long as it is capable of forming a leafing layer (a layer or stratum formed from the leaf pigment) within the synthetic resin material. The invention is most effective when a pearlescent leaf pigment, for example titanium dioxide coated mica, is used.

Any known molding techniques, for example injection molding, extrusion molding or casting, may be used.

Three examples of the invention will be described in detail below.

### Example 1.

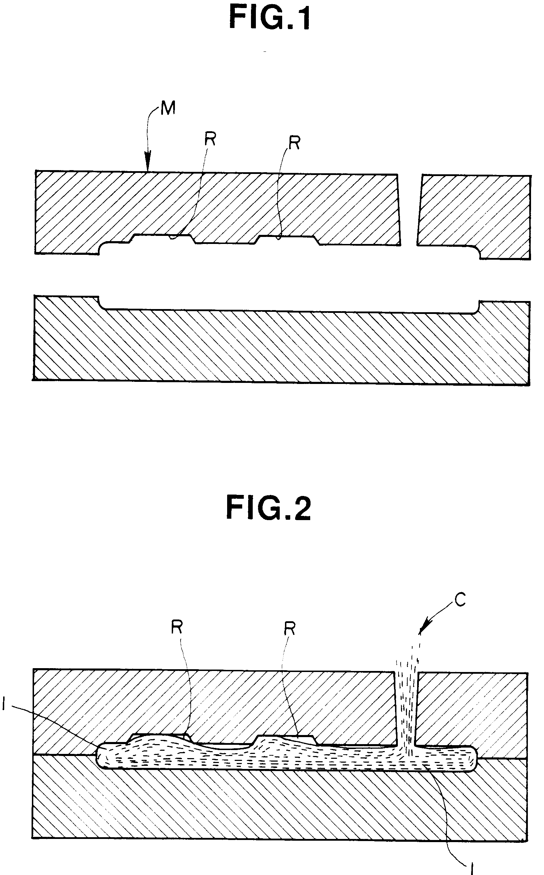

A leaf pigment consisting of titanium dioxide coated mica of size 10 to 60 µm and graphite of size 10 to 40 µm is used. The leaf pigment is mixed with a transparent cellulose propionate resin so that the titanium dioxide coated mica concentration is approximately 10000 ppm and the graphite concentration is approximately 1000 ppm. The mixed resin is heated to a temperature of approximately 185°C, until molten, and the molten mixture is then injected into a mold M for forming the temple of the frame of a pair of spectacles, as shown in Figure 1.

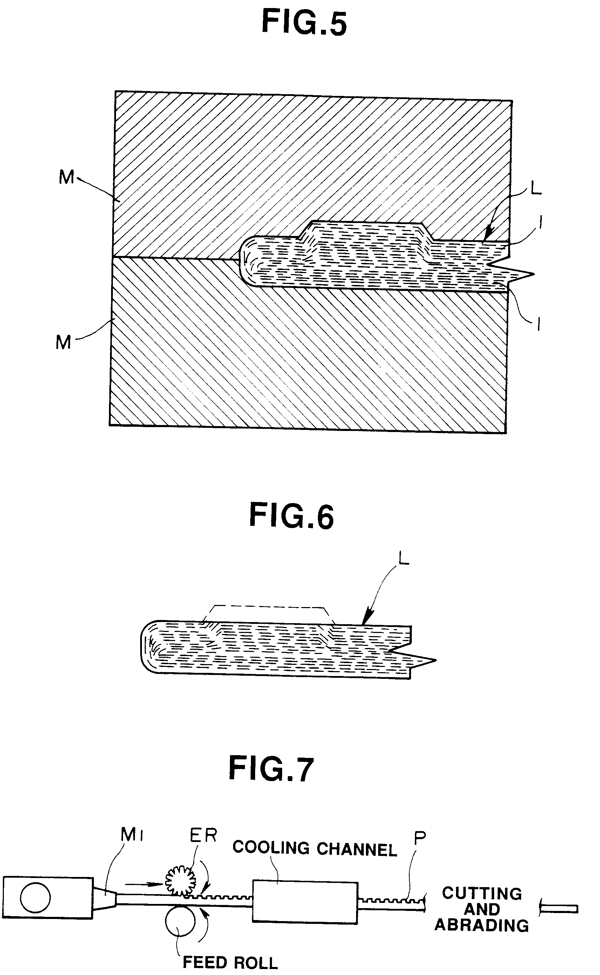

The cavity of the mold M includes two cavities R. When the cellulose propionate resin flows and fills the mold, the leaf pigments 1 mixed in the resin form a leafing layer L which extends along the flow path of the resin, as shown in Figures 2 and 5. It is clear from Figure 2 that the leafing layer is deflected where the mold includes the cavities R.

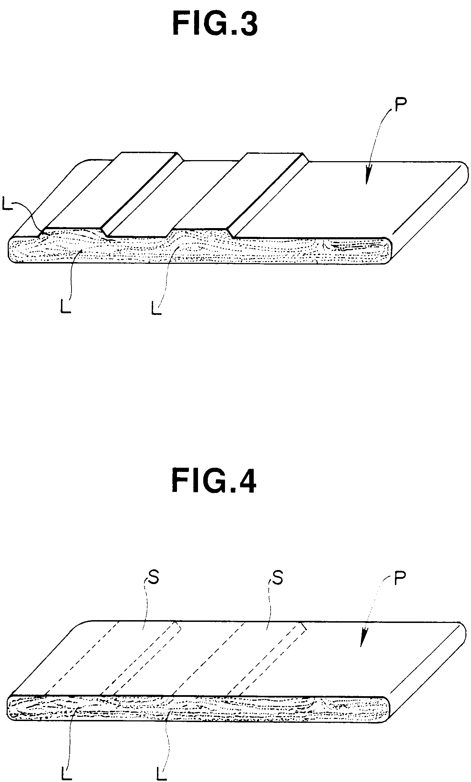

After the synthetic resin has been injected into the mold M and allowed to cool and set, the synthetic resin molding P (Figures 3 and 6) is removed from the mold M and the convex parts of the molding P which extended into the cavities R during molding are cut away and abraded so as to form a smooth surface. The leafing layer is visible at and/or through the surface of the molding, the complex reflective property of the leaf pigment resulting in the production of a three dimensional stereographic pattern.

### Example 2.

The leaf pigment used in example 2 comprises titanium dioxide coated mica of size 10 to 60 µm and graphite of size 10 to 40 µm. The leaf pigment is mixed with a transparent vinyl chloride resin so that the titanium dioxide coated mica concentration is approximately 10000 ppm and the graphite concentration is approximately 3000 ppm. The mixed resin is heated to approximately 173°C until molten, and is then extruded from an extrusion die M1, shown in Figure 7, so as to form a particular molding shape. The surface of the vinyl chloride resin is pressed whilst soft using an embossed roller ER, the embossing surface E of the roller ER having a continuous pattern of convex and concave regions, resulting in the leafing layer being deflected within the synthetic resin material. The pressed surface of the vinyl chloride resin is cooled and is then cut and abraded so as to form a smooth surface at, and/or beneath which a three dimensional stereographic pattern.

### Example 3.

The leaf pigment used in example 3 comprises titanium dioxide coated mica of size 10 to 60 µm and graphite of size 10 to 40 µm. A cold setting epoxy resin is used, the resin having a viscosity of 500 to 800 cps, with a thixotropy agent (ultra fine particles of high purity silica gel anhydride).

The leaf pigments are compounded into the epoxy resin so that the titanium dioxide coated mica has a concentration of approximately 10000 ppm and the graphite has a concentration of approximately 1000 ppm, and then the resin is prepared for casting. The casting resin is then molded using a cast molding technique, the mold including a plate shaped cavity with a striped pattern cut into it. When completely set, the cast resin is removed, and the surface of the cast resin is abraded so as to form a smooth surface. The resulting product includes a striped stereographic pattern visible at and/or beneath the surface of the transparent resin produced by the leafing layer formed by the leaf pigment.

In some circumstances more than one leafing layer may form in the products.

Although the viscosity of the epoxy resin preferably in the range 500 to 800 cps, the above technique works with resin having a viscosity of approximately 10000 cps.

Conveniently the particle size of the titanium dioxide coated mica leafing pigment is within the ranges of length 5 to 150 micro-metre and thickness 0.06 to 0.17 micro-metre.

The products of the above described methods each include a three dimensional stereographic pattern visible at and/or through a smooth surface of the product. It will be recognised that generally the aim will be for the pattern to be below the surface of the product so as to be within the mass of the transparent material. However there can be situations in which sufficient of the product is cut away for the, some of, or all of the leafing layer(s) to break the final surface of the product such that parts of layer(s) may be exposed or removed resulting in the pattern being at and below the product surface. In the product there are no convex or concave regions to which grease or dust may adhere. There is also a much wider choice of designs than can be produced using the prior art technique of producing tiles or synthetic resin sheets described earlier.

## Claims

1. A process for manufacturing a synthetic resin decorative product having an optically three-dimensional stereographic pattern, the process comprising the steps of:
molding a synthetic resin material including a leaf pigment, the leaf pigment forming a leafing layer (L) within the synthetic resin material,
deflecting the position of the leafing layer (L) within the synthetic resin material, and
cutting or abrading the surface of the molded synthetic resin material (P) so as to provided a smooth plane or curved surface at and/or through which the pattern is visible.

2. A process as claimed in Claim 1 characterized in that the molding step comprises injection molding the synthetic resin material using a mold (M), the wall defining the molding chamber thereof including at least one convex or concave region (R) for deflecting the leafing layer (L).

3. A process as claimed in Claim 1 or Claim 2 characterized in that the product (P) is a part of the frame of a pair of spectacles.

4. A process as claimed in Claim 1 charact erized in that the molding step comprises extruding the synthetic resin material from an extruding die (M1), and embossing the extruded material so as to produce deflections in the location of a leafing layer within the extruded material.

5. A process as claimed in Claim 1 characterized in that the molding step comprises injecting the synthetic resin material into a casting mold, the wall of the mold defining the molding chamber including at least one convex or concave region for deflecting the leafing layer within the synthetic resin material.

6. A process as claimed in Claim 5 characterized in that the casting resin comprises epoxy resin provided with a thixotropy agent, the epoxy resin having a viscosity in the range of 500 to 10000 cps.

7. A process as claimed in any one of the preceding claims characterized in that the leaf pigment comprises graphite and titanium dioxide coated mica.

8. A synthetic resin decorative product having an optically three dimensional stereographic pattern which is visible at and/or through a surface of the product, manufactured using the process claimed in any one of the preceding claims.

9. A synthetic resin decorative product as claimed in Claim 8 characterized in that the product comprises a part of the frame of a pair of spectacles.
